# FASCICULE DE BREVET EUROPEEN

(11) **EP 0 392 885 B1**
(45) Date de publication et mention de la délivrance du brevet: **25.05.1994**
(21) Numéro de dépôt: 90400436.3
(22) Date de dépôt: 16.02.1990
(51) Int. Cl.: G01M 3/20

(54) **Procédé de contrôle de l'étanchéité de compartiments destinés à recevoir des marchandises, notamment des céréales en vrac**
Dichtheitsprüfverfahren von Behältern für Waren, insbesondere lose Zerealien
Procedure for leak-testing compartments for storing goods, in particular bulk cereals

(30) Priorité: 17.02.1989 FR 8902113
(43) Date de publication de la demande: 17.10.1990
(73) Titulaire: DESINSECTISATION MODERNE, F-76000 Rouen (FR)
(72) Inventeur: Vacquer, Michel, F-76000 Rouen (FR)
(74) Mandataire: Leszczynski, André

(56) Documents cités:
- CH-A- 379 443
- FR-A- 1 577 354
- GB-A- 789 089
- US-A- 3 483 735
- LE VIDE, vol. 16, no. 93, mai/juin 1961, pages 141-142, Paris, FR; "Contrôle de l'étanchéité et détection des fuites par test au gaz ammoniac"
- PATENT ABSTRACTS OF JAPAN, vol. 6, no. 108 (P-123)[986], 18 juin 1982; & JP-A-57 040 628

## Description

La présente invention est relative à un procédé de désinfection ou désinsectisation par fumigation de céréales en vrac dans un compartiment.

Afin de détruire les animaux nuisibles susceptibles d'endommager des céréales, stockées en vrac dans des compartiments tels que des silos de stockage ou des cales de navires, l'on pratique couramment des opérations de désinfection par fumigation en introduisant dans le compartiment dans lequel se trouvent les céréales un produit fumigatoire dégageant un gaz toxique à une concentration mortelle pour les animaux nuisibles.

A cet effet, on utilise par exemple couramment des produits fumigatoires introduits à l'état solide, par exemple un phosphure métallique tel que du phosphure d'aluminium qui, en présence d'eau se décompose pour former du phosphure d'hydrogène ou phosphine qui est un poison pour les insectes et les rongeurs, mais également pour les êtres humains.

Il importe donc que les compartiments dans lesquels la fumigation est réalisée soient parfaitement étanches pour éviter que les gaz toxiques ne s'échappent du compartiment et n'intoxiquent des personnes de service se trouvant à proximité. De plus, l'étanchéité est indispensable pour que la concentration nécessaire en gaz soit maintenue dans le compartiment pendant toute la durée du traitement.

La présente invention a pour objet de proposer un procédé particulièrement simple et économique pour effectuer une désinfection par fumigation, et ce en localisant de manière précise les emplacements de fuite éventuels, de manière à pouvoir les colmater.

Les caractéristiques du procédé selon l'invention font l'objet de la revendication 1.

Par gaz fumigatoire selon l'invention on entend un gaz apte à réaliser un traitement de désinsectisation et de destruction des animaux nuisibles du compartiment.

De préférence, on utilise un gaz présentant une densité inférieure à celle de l'air qui aura donc tendance à s'échapper plus facilement au travers d'éventuelles ouvertures ou fissures de la paroi du compartiment, et qui pourra être détecté rapidement.

Le gaz peut être injecté seul ou en mélange avec un gaz propulseur sous pression, dans le compartiment le cas échéant au travers d'un conduit obturable existant ou prévu à cet effet et débouchant à l'intérieur du compartiment.

En variante, le gaz peut être formé par thermo-nébulisation ou produit par dégagement à partir d'un produit solide ou liquide introduit dans le compartiment, le cas échéant par réaction chimique avec un produit de réaction introduit simultanément avant fermeture complète du compartiment ou après celle-ci au travers d'un conduit ou d'une ouverture obturable existant ou prévu à cet effet.

On rappelle que la thermo-nébulisation consiste à injecter un produit liquide à l'aide d'un canon chaud pour constituer une fumée projetée sous pression.

Selon la présente invention, on peut utiliser un gaz visible à l'oeil nu, sous forme de fumée, le cas échéant colorée, auquel cas la détection de défauts d'étanchéité du compartiment pourra s'effectuer par simple inspection visuelle de la périphérie de celui-ci.

Il est également possible dans le cadre de l'invention, d'utiliser des gaz tels non visibles à l'oeil nu.

On peut en particulier utiliser des gaz odorants non toxiques pour l'homme, auquel cas la détection pourra être effectuée par voie olfactive par une personne se déplaçant à la périphérie extérieure du compartiment.

Dans un mode particulier de mise en oeuvre de l'invention, on peut utiliser comme gaz fumigatoire le même gaz que celui qui sera ultérieurement utilisé pour la désinfection par fumigation du compartiment une fois celui-ci rempli.

Selon l'invention on réalise en même temps que la détection d'éventuels défauts d'étanchéité du compartiment, la destruction d'animaux nuisibles qui pourraient s'y trouver avant le remplissage.

Si le gaz fumigatoire est toxique pour l'homme, il est nécessaire de munir d'équipements de protection, en particulier de masques à gaz, le personnel amené à procéder à l'inspection visuelle de la périphérie extérieure du compartiment.

Le cas échéant, la détection pourra être effectuée au moyen d'appareils de détection portatifs utilisant notamment des réactifs chimiques sensibles au gaz utilisé.

Une fois la détection selon l'invention réalisée, l'on peut procéder aux opérations de colmatage et de réparation nécessaires de telle sorte que les opérations de fumigation ultérieures, après introduction des céréales en vrac, puissent s'effectuer dans un compartiment parfaitement étanche sans aucun danger pour le personnel appelé à se trouver à proximité.

La mise en oeuvre de l'invention permet de déposer sur les parois du compartiment une pellicule de produit de désinfection dont l'effet se poursuivra après remplissage du compartiment.

La présente invention peut être mise en oeuvre dans des silos de stockage de céréales en vrac dans des installations à terre telles que des minoteries ou des équipements portuaires.

Elle peut être également mise en oeuvre dans des cales de navires, alors que celui-ci se trouve à quai ou en mer, le procédé pouvant alors être mis en oeuvre successivement sur chacune des cales.

La mise en oeuvre du procédé de l'invention accroit l'efficacité du traitement de fumigation qui doit être ultérieurement réalisé une fois le compartiment rempli.

En effet, en particulier dans les cales de navire, la température de paroi est inférieure à celle des céréales à traiter. Les gaz de fumigation généralement utilisés perdent de leur efficacité à des températures basses (inférieures à 8 °C) et, de plus, la différence de température entre les céréales à traiter et la paroi provoque des courants d'air entrainant le gaz et l'empêchant de venir au contact de la paroi, de sorte que celle-ci et les céréales situées à proximité sont rarement traitées efficacement. La pellicule déposée lors de la mise en oeuvre de l'invention pallie à cet inconvénient.

## Revendications

1. Procédé de désinfection par fumigation de céréales en vrac dans un compartiment comprenant les étapes suivantes :
a) on introduit d'abord dans le compartiment vide de céréales un gaz fumigatoire ou un produit solide ou liquide apte à engendrer un gaz fumigatoire de manière à réaliser la désinfection du compartiment vide et amener du gaz fumigatoire sur et au voisinage des parois du compartiment de manière à ce qu'une pellicule de produit de désinfection se dépose sur les parois du compartiment, dont l'effet se poursuivra après remplissage du compartiment en céréales ;
b) on inspecte de l'extérieur la périphérie du compartiment fermé pour détecter l'apparition éventuelle d'un échappement de gaz fumigatoire et on colmate les emplacements de fuite détectés ;
c) et, de manière connue, après remplissage du compartiment en céréales, on réalise une désinfection par fumigation.

2. Procédé selon la revendication 1, caractérisé par le fait que le gaz fumigatoire est le même gaz que celui utilisé ultérieurement pour la désinfection par fumigation du compartiment une fois celui-ci rempli.

3. Procédé selon l'une quelconque des revendications précédentes, caractérisé par le fait que ledit gaz fumigatoire est introduit par thermo-nébulisation.

4. Procédé selon l'une quelconque des revendications précédentes, caractérisé par le fait que le compartiment est un silo de stockage de céréales en vrac dans des installations à terre.

5. Procédé selon l'une quelconque des revendications 1 à 3, caractérisé par le fait que le compartiment est une cale de navire.

## Claims

1. Process for the disinfection by fumigation of cereals in bulk in a compartment, comprising the following steps:
a) one introduces first into the empty cereal compartment a fumigating gas or a solid or liquid product capable of producing a fumigating gas in such a way as to effect the disinfection of the empty compartment and to arrange the fumigating gas on and in the region of the walls of the compartment in such a way that a film of the disinfection product is deposited on the walls of the compartment, the effect of which will continue after the cereal compartment is filled;
b) one inspects the exterior of the perimeter of the closed compartment to detect the eventual appearance of an escape of fumigating gas and one seals the detected locations of escapes;
c) and, in a known manner, after filling the cereal compartment, one effects a disinfection by fumigation.

2. Process according to Claim 1, characterised by the fact that the fumigating gas is the same gas as is used subsequently for the disinfection by fumigation of the compartment once it is filled.

3. Process according to any of the preceding Claims, characterised by the fact that the said fumigating gas is introduced by thermo-nebulisation.

4. Process according to any one of the preceding Claims, characterised by the fact that the compartment is a storage silo for bulk cereals in a land installation.

5. Process according to any of Claims 1 to 3, characterised by the fact that the compartment is a ship's hold.

## Patentansprüche

1. Verfahren zum Räucherdesinfizieren von in einer Kammer lose vorliegendem Getreide mit folgenden Schritten:
(a) zunächst wird in die noch nicht mit dem Getreide beschickte Kammer ein Räuchergas oder ein fester oder flüssiger Stoff, der ein Räuchergas zu erzeugen vermag, so eingeleitet, daß die leere Kammer desinfiziert und das Räuchergas an oder in die Nähe der Kammerwände gebracht wird, so daß sich an den Kammerwänden ein Film aus dem Desinfektionsmittel bildet, dessen Wirkung nach Füllen der Kammer mit Getreide andauert,
(b) die Umgebung der Kammer wird von außen untersucht, um gegebenenfalls das Entweichen von Räuchergas festzustellen, und die ermittelten Leckstellen werden geschlossen, und
(c) nach Beschicken der Kammer mit Getreide wird in bekannter Weise eine Räucherdesinfektion durchgeführt.

2. Verfahren nach Anspruch 1, dadurch gekennzeichnet, daß das Räuchergas das gleiche ist, wie es schließlich zur Räucherdesinfektion der Kammer nach deren Beschicken verwendet wird.

3. Verfahren nach Anspruch 1 oder 2, dadurch gekennzeichnet, daß das Räuchergas durch Warmvernebeln eingeleitet wird.

4. Verfahren nach einem der vorhergehenden Ansprüche, dadurch gekennzeichnet, daß die Kammer ein Speichersilo für loses Getreide in Bodenanlagen ist.

5. Verfahren nach einem der Ansprüche 1 bis 3, dadurch gekennzeichnet, daß die Kammer ein Schiffsbunker ist.
